# EUROPÄISCHE PATENTANMELDUNG

(11) **EP 1 102 143 A2**
(43) Veröffentlichungstag der Anmeldung: **23.05.2001**
(21) Anmeldenummer: 00203595.4
(22) Anmeldetag: 16.10.2000
(51) Int. Cl.: G05D 23/02

(54) **Ventil, insbesondere Thermostatventil für Heizungsanlagen**

(30) Priorität: 17.11.1999 DE 19955258
(71) Anmelder: Danfoss A/S, 6430 Nordborg (DK)
(72) Erfinder: Wiwe, Joergen Seindal, 8355 Solbjerg (DK); Hoelck, Poul, 8330 Beder (DK); Garm, Fester, 8600 Silkeborg (DK)

(57) **Zusammenfassung**

Ein Ventil, insbesondere Thermostatventil für Heizungsanlagen, weist ein Gehäuse (10), einen Ventilsitz (14) und ein Verschlußstück (15) auf, das mittels eines durch einen Dichteinsatz (17) nach außen geführten Stifts (18) zu betätigen ist. Ferner gibt es eine Anschlußvorrichtung (21) zum Befestigen eines ersten Typs eines Betätigungsaufsatzes, die eine Anlagefläche in einem ersten Abstand (A) vom freien Ende des Stifts (18) und eine zugehörige Spannfläche (19) aufweist. Zum Befestigen eines zweiten Typs eines Betätigungsaufsatzes ist an der Außenseite des Gehäuses (10) ein in Richtung der Stiftachse verstellbares Anschlußelement (22) angeordnet, das eine zweite Spannfläche sowie eine zugehörige Anlagefläche (20) aufweist und aus einer ersten Stellung in eine zweite Stellung verstellbar ist. Auf diese Weise ergibt sich ein Ventil, das alle Mittel aufweist, um wahlweise einen von mindestens zwei unterschiedlichen Betätigungsaufsatz-Typen anzubringen.

## Beschreibung

Die Erfindung bezieht sich auf ein Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines ersten Typs eines Betätigungsaufsatzes, die eine Anlagefläche in einem ersten Abstand vom freien Ende des Stifts und eine zugehörige erste Spannfläche aufweist.

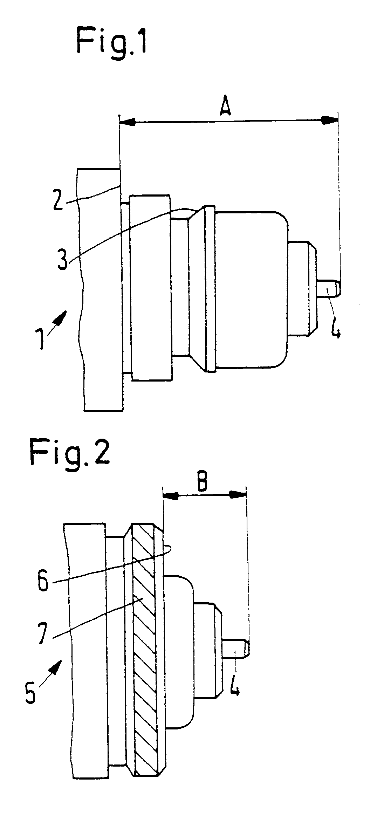

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt.

Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß zum Befestigen eines zweiten Typs eines Betätigungsaufsatzes an der Außenseite des Gehäuses ein in Richtung der Stiftachse verstellbares Anschlußelement angeordnet ist, das eine zweite Spannfläche sowie eine zugehörige Anlagefläche aufweist und aus einer ersten in eine zweite Stellung verstellbar ist.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind. Die Anschlußvorrichtungen sind hierbei teilweise am Ventilgehäuse, teilweise am verstellbaren Anschlußelement ausgebildet.

Günstig ist es, daß die erste Spannfläche eine Konusfläche ist und daß das Anschlußelement ein Außengewinde mit größerem Durchmesser als der Außendurchmesser der Konusfläche aufweist und aus einer ersten Stellung, in der Konusfläche und zugehörige Anlagefläche frei zugänglich sind, in eine zweite Stellung, in der die Konusfläche überlappt ist, verstellbar ist. Die Relativverschiebung ist möglich, weil das Außengewinde einen größeren Durchmesser hat als der Außendurchmesser der Konusfläche.

Von Vorteil ist es, daß die Stirnfläche des Anschlußelements in der ersten Stellung die der ersten Spannfläche zugehörige Anlagefläche und in der zweiten Stellung die dem Außengewinde zugehörige Anlagefläche bildet. Dies gibt konstruktive Vorteile, weil die Anlagefläche doppelt genutzt wird.

Günstig ist es auch, daß das verstellbare Anschlußelement einen Ring aufweist, der das Außengewinde und stirnseitig die zugehörige Anlagefläche trägt. Der Ring gibt den Anschlußvorrichtungen eine hohe Stabilität.

Dies gilt auch, wenn vorzugsweise dafür gesorgt ist, daß die Außenseite des Gehäuses Längsrippen aufweist und der Ring innen Axialschlitze besitzt, in welche die Längsrippen greifen. Durch die Axialschlitze ergibt sich eine Längsführung, also eine sichere Betätigung beim Verschieben von der einen in die andere Stellung.

Empfehlenswert ist es ferner, daß das verstellbare Anschlußelement ein Sicherungselement aufweist, das in der zweiten Stellung die axiale Lage des Anschlußelements sichert. Auf diese Weise kann das verstellbare Anschlußelement genau in die gewünschte Lage gebracht werden.

Von Vorteil ist es auch, daß das Sicherungselement eine federnde Raste aufweist, die in der zweiten Stellung zwecks Blockierung in eine Vertiefung eingreift. Durch den irreversiblen Eingriff ist es nicht möglich, daß versehentlich das verstellbare Anschlußelement in eine falsche Lage gedrückt wird.

Die Erfindung wird im folgenden anhand eines bevorzugten Ausführungsbeispiels in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorichtung für einen zweiten Typ eines Betätigungsaufsatzes gemäß dem Stand der Technik,
- Fig. 3: einen Längsschnitt durch ein Ventil gemäß der Erfindung mit einer Anschlußvorrichtung entsprechend Fig. 1 und
- Fig. 4: einen Längsschnitt durch das Ventil der Fig. 3 mit einer Anschlußvorrichtung entsprechend Fig. 2.

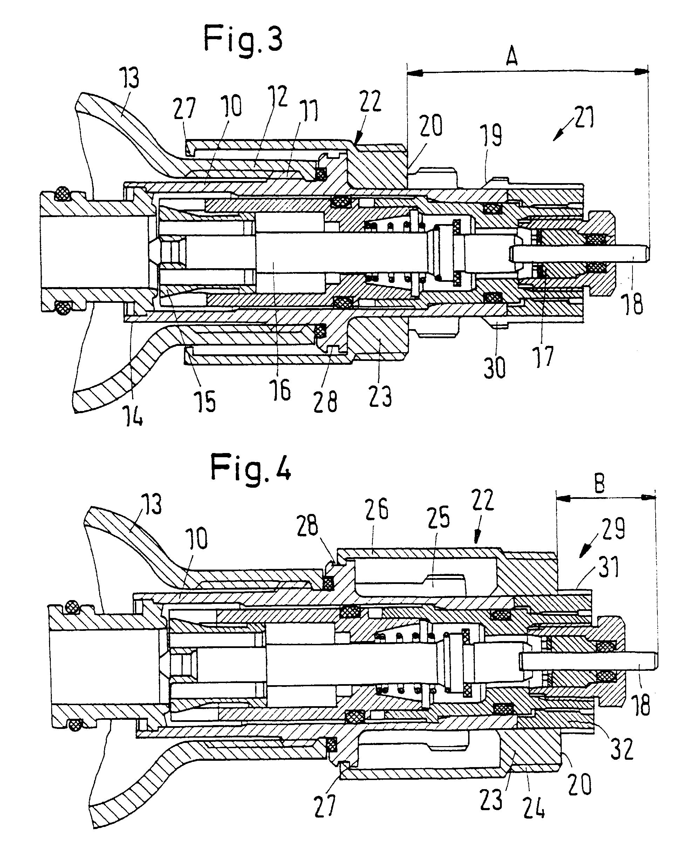

In den Fig. 3 und 4 ist ein Gehäuse 10 mittels eines Außengewindes 11 in einen Stutzen 12 eines Heizkörpers 13 eingeschraubt. Das Gehäuse trägt einen Ventilsitz 14, der mit einem Verschlußstück 15 zusammenwirkt. Das Verschlußstück ist über einen Ventilschaft 16 und einen durch eine Dichtvorrichtung 17 herausgeführten Ventilstift 18 bei aufgespanntem Betätigungsaufsatz mit dessen Betätigungselement gekuppelt.

Am Gehäuse 10 ist außen als erste Spannfläche eine Konusfläche 19 angebracht, der eine Anlagefläche 20 zugeordnet ist. Dies ergibt eine Anschlußvorrichtung 21 mit einer Form, die geeignet ist zur Befestigung eines ersten Typs eines Betätigungsaufsatzes. Der Abstand A zwischen der Anlagefläche 20 und dem freien Ende des Ventilstiftes 18 beträgt etwa 30 mm.

Ein Anschlußelement 22 weist einen Ring 23 auf, der an seiner Außenseite ein Außengewinde 24 und an seiner Stirnfläche die Anlagefläche 20 trägt. Der Ring 23 besitzt an der Innenseite Axialschlitze, in die Längsrippen 25 des Gehäuses greifen. Der Ring läßt sich daher achsparallel aus der Stellung der Fig. 3 in die Stellung der Fig. 4 verschieben. Sicherungselemente 26 bestehen aus federnden Fingern, die an die Rückseite des Ringes 23 anschließen. Sie weisen eine federnde Raste 27 auf, die bei Erreichen der zweiten Stellung in eine Nut 28 einfällt und daher diese zweite Stellung irreversible festlegt.

In dieser zweiten Stellung ergibt sich eine zweite Anschlußvorrichtung 29 mit einer Form, die zur Befestigung eines zweiten Typs eines Betätigungsaufsatzes geeignet ist. Hier ist die Anlagefläche 20 wiederum zur Anlage des Sockels eines Betätigungsaufsatzes wirksam.

Ihr Abstand B vom freien Ende des Ventilstifts 18 beträgt beispielsweise etwa 10 mm.

Durch die Längsrippen 25 ist das Anschlußelement 22 gegen Drehung gesichert. Übliche Profilierungen 30 am Gehäuse 10 dienen der Drehsicherung des Betätigungsaufsatzes vom ersten Typ, Profilierungen 31, z.B. ein Sechskant, an der Außenseite eines Ringes 32 zur Voreinstellung des kᵥ-Wertes der Drehsicherung eines Betätigungsaufsatzes vom zweiten Typ.

## Patentansprüche

1. Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist, dadurch gekennzeichnet, daß zum Befestigen eines zweiten Typs eines Betätigungsaufsatzes an der Außenseite des Gehäuses (10) ein in Richtung der Stiftachse verstellbares Anschlußelement (22) angeordnet ist, das eine zweite Spannfläche sowie eine zugehörige Anlagefläche (20) aufweist und aus einer ersten in eine zweite Stellung verstellbar ist.

2. Ventil nach Anspruch 1, dadurch gekennzeichnet, daß die erste Spannfläche eine Konusfläche (19) ist und daß das Anschlußelement (22) ein Außengewinde (24) mit größerem Durchmesser als der Außendurchmesser der Konusfläche (19) aufweist und aus einer ersten Stellung, in der Konusfläche (19) und zugehörige Anlagefläche (20) frei zugänglich sind, in eine zweite Stellung, in der die Konusfläche (19) überlappt ist, verstellbar ist.

3. Ventil nach Anspruch 1 oder 2, dadurch gekennzeichnet, daß die Stirnfläche des Anschlußelements (22) in der ersten Stellung die der ersten Spannfläche zugehörige Anlagefläche (20) und in der zweiten Stellung die dem Außengewinde (24) zugehörige Anlagefläche (20) bildet.

4. Ventil nach einem der Ansprüche 1 bis 3, dadurch gekennzeichnet, daß das verstellbare Anschlußelement (22) einen Ring (23) aufweist, der das Außengewinde (24) und stirnseitig die zugehörige Anlagefläche (20) trägt.

5. Ventil nach Anspruch 4, dadurch gekennzeichnet, daß die Außenseite des Gehäuses (10) Längsrippen (25) aufweist und der Ring (23) innen Axialschlitze besitzt, in welche die Längsrippen (25) greifen.

6. Ventil nach einem der Ansprüche 1 bis 5, dadurch gekennzeichnet, daß das verstellbare Anschlußelement (22) ein Sicherungselement (26) aufweist, das in der zweiten Stellung die axiale Lage des Anschlußelements (22) sichert.

7. Ventil nach Anspruch 6, dadurch gekennzeichnet, daß das Sicherungselement (26) eine federnde Raste (27) aufweist, die in der zweiten Stellung zwecks Blockierung in eine Vertiefung (28) eingreift.
